# EUROPEAN PATENT APPLICATION

(11) **EP 3 758 262 A1**
(43) Date of publication of application: **30.12.2020**
(21) Application number: 19182820.1
(22) Date of filing: 27.06.2019
(51) Int. Cl.: H04J 14/02

(54) **PROTECTION SWITCHING IN AN OPTICAL NETWORK DEVICE**

(71) Applicant: Xieon Networks S.à r.l., 2536 Luxembourg (LU)
(72) Inventor: Schimpe, Robert, 85521 Riemerling / Hohenbrunn (DE)
(74) Representative: Kretschmann, Dennis

(57) **Abstract**

An optical network device comprises a first input line adapted to receive a first optical input signal; a second input line adapted to receive a second optical input signal, wherein the second input line is a protection line for the first input line; a first amplifier unit in the first input line and adapted to selectively amplify the first optical input signal; a second amplifier unit in the second input line and adapted to selectively amplify the second optical input signal; an input coupler unit adapted to couple the first input line and the second input line downstream of the first optical amplifier unit and the second optical amplifier unit into an output line; and a control unit adapted to selectively control an operation of the first amplifier unit and an operation of the second amplifier unit.

## Description

### Field of the Disclosure

The disclosure relates to optical networks, in particular to techniques for protection switching in an optical network device, such as an optical add/drop multiplexer device.

### Background

Typical wavelength division multiplexing (WDM) networks comprise a plurality of nodes, which are interconnected and transmit and receive WDM signals. The nodes may comprise optical add/drop multiplexers (OADM) for adding additional signals on available channels to a WDM signal and/or for dropping WDM signals from a particular channel of received WDM signals in the nodes. A channel may designate a wavelength or wavelength range that can be used for signal transmission.

In order to maintain the communication even in case of a failure, such as a break of a fiber connection, or in case of a downtime due to maintenance, some WDM networks rely on protection paths, which are alternative signal paths that can be used for the transmission of optical signals instead of a failing working path. For instance, a first optical fiber and a spatially disjunct second optical fiber that transfer identical signals in parallel between two optical network elements may constitute a pair of a working path and a protection path, and provide redundancy in case one of the fibers fails.

Reconfigurable optical add/drop multiplexers (ROADM) with protection paths that rely on optical switches are disclosed in US 2018/0375606 A1. The optical switches may be used to connect an incoming pair of working path and the protection path selectively to an input signal line of the ROADM structure, for instance by a 2 x 1 wavelength selective switch (WSS). Pre-amplifiers may be provided both in the working path and in the protection path upstream of the optical switch to amplify the incoming signals.

EP 2 940 911 A1 describes colourless optical add/drop multiplexers to which protection schemes can be applied. Colourless optical/drop multiplexers may rely on splitters, combiners or wavelength selective switches so that a transmission frequency band of a transponder being connected to a network element can be changed without re-cabling the transponder to another port.

However, the additional components required for the protection switching may enhance the complexity of the optical network device and can themselves introduce possible new failure points. Moreover, the switches employed for the protection switching may require regular testing, which can result in an undesirable interruption of the network traffic.

What is needed are improved and robust protection switching techniques that do not suffer from these disadvantages.

### Overview

This objective is achieved with an optical network device according to claim 1 and a method for operating an optical network device according to claim 11. The dependent claims relate to preferred embodiments.

In a first aspect, the disclosure relates to an optical network device, comprising a first input line adapted to receive a first optical input signal; a second input line adapted to receive a second optical input signal, wherein the second input line is a protection line for the first input line; a first amplifier unit in the first input line and adapted to selectively amplify the first optical input signal; a second amplifier unit in the second input line and adapted to selectively amplify the second optical input signal; an input coupler unit adapted to couple the first input line and the second input line downstream of the first optical amplifier unit and the second optical amplifier unit into an output line; and a control unit adapted to selectively control an operation of the first amplifier unit and an operation of the second amplifier unit.

Given that the first amplifier unit in the working path and the second amplifier unit in the protection path may be selectively controlled to amplify either signal, an additional active switch for switching between the working path and the protection path may be dispensable. A relatively simple coupler unit downstream of the first and second amplifier units may be sufficient to couple the working path and the protection path, which reduces some of the complexity of conventional protection schemes.

The first optical input signal and the second optical input signal may comprise any signals that can be transmitted through an optical network. In some examples, the first optical input signal and/or the second optical input signal are wavelength division multiplexing (WDM) signals.

The first input line or second input line may denote any transmission path for optical signals. In some examples, the first input line and/or the second input line may comprise an optical fiber.

In an embodiment, the first input line and/or the second input line may be unidirectional transmission paths.

In another embodiment, the first input line and/or the second input line may be bidirectional transmission paths.

A protection line, in the context of the present disclosure, may refer to a transmission path that provides redundancy for a signal line, such as in case of a failure of the signal line.

In the context of the present disclosure, the first input line may correspond to the working path, and the second input line may correspond to the protection path. However, this is a matter of convention, and in some examples the first input line may correspond to the protection path, whereas the second input line corresponds to the working path.

According to an embodiment, the second optical input signal duplicates the first optical input signal. This may provide redundancy in case the first optical input signal fails.

In an example, the second input line is distinct from and/or spatially separated from and/or disjoint from the first input line. In this way, the second input line can provide redundancy in case the first input line fails, or vice versa.

According to an embodiment, the control unit may be adapted to selectively activate or deactivate the operation of the first amplifier unit and/or the second amplifier unit.

The first amplifier unit and/or the second amplifier unit may be adapted to amplify the respective first optical input signal and/or second optical input signal when the respective first amplifier unit and/or second amplifier unit are activated.

Correspondingly, the first amplifier unit and/or the second amplifier unit may be adapted to attenuate or block the respective first optical input signal and/or second optical input signal when the respective first amplifier unit and/or second amplifier unit are deactivated.

Hence, the first input line and the second input line may be addressed independently of one another to select either the first input line or the second input line for signal reception at the input node of the optical network device, thereby replacing a conventional switch.

According to an embodiment, the first amplifier unit and/or the second amplifier unit may be adapted to amplify the respective first optical input signal and/or the second optical input signal in a first operational state, and may be further adapted to attenuate or block the respective first optical input signal and/or the second optical input signal in a second operational state different from the first operational state.

The control unit may be adapted to switch the first amplifier unit and/or the second amplifier unit from the first operational state to the second operational state, or vice versa.

In some embodiments, the control unit may be realized in hardware. In other embodiments, the control unit may be realized in firmware or software.

The control unit may be a stand-alone device, or may be incorporated into a control device that controls an operation of the optical network device.

The control unit may also be incorporated into the first amplifier unit or the second amplifier unit.

Switching between the first input line and the second input line may be effected in response to detecting a switching condition.

In an embodiment, the device comprises a first detecting unit adapted to detect a presence or an absence of the first optical input signal in the first input line.

Correspondingly, the device may further comprise a second detecting unit adapted to detect a presence or an absence of the second optical input signal in the second input line.

According to an embodiment, the first detecting unit and/or the second detecting unit may be adapted to alternatively or additionally detect the presence or absence of a third optical input signal in the first input line or in the second input line, respectively, wherein the third optical input signal is different from the first optical input signal and/or the second optical input signal.

For instance, the third optical input signal may be an optical signal in a spectral range that is different from a spectral range of the first optical input signal and/or a spectral range of the second optical input signal.

According to an embodiment, the third optical input signal may be in a spectral range that is unsuitable for the first amplifier unit and/or the second amplifier unit, respectively.

According to an embodiment, the third optical input signal may be an optical supervisory channel signal.

According to some embodiments, the first detecting unit and/or the second detecting unit may be stand-alone devices.

According to other embodiments, the first detecting unit and/or the second acting unit may be functionally and/or physically integrated into the first amplifier unit and the second amplifier unit, respectively.

Hence, in some embodiments the first amplifier unit and/or the second amplifier unit may be adapted to detect the presence or the absence of the first optical input signal in the first input line and the presence or absence of the second optical input signal in the second input line, respectively.

Further, in some embodiments the first amplifier unit and/or the second amplifier unit may be adapted to detect the presence or absence of the third optical input signal in the first input line or in the second input line, respectively.

The first detecting unit and/or the second detecting unit may comprise at least one sensor adapted to receive incoming light. The first detecting unit and/or the second detecting unit may further comprise a processing unit coupled to the respective sensor and adapted to analyse optical properties of the incoming signals.

The first detecting unit and/or the second detecting unit may be coupled to the control unit, such as by means of a wire connection or a wireless connection.

According to an embodiment, the control unit may be adapted to activate an operation of the second optical amplifier unit and/or to deactivate an operation of the first optical amplifier unit in response to the first detecting unit detecting the absence of the first optical input signal in the first input line, and/or in response to the first detecting unit detecting the presence or absence of the third optical input signal in the first input line.

Conversely, according to an embodiment the control unit may be adapted to activate an operation of the first optical amplifier unit and/or to deactivate an operation of the second optical amplifier unit in response to the second detecting unit detecting the absence of the second optical input signal in the second input line, and/or in response to the second detecting unit detecting the presence or absence of the third optical input signal in the second input line.

In the context of the present disclosure, the first amplifier unit and/or the second amplifier unit may comprise any device adapted to amplify or de-amplify, attenuate or block optical signals.

According to an embodiment, the first amplifier unit and/or the second amplifier unit may comprise a switchable optical amplifier, in particular a switchable Raman optical amplifier and/or a switchable semiconductor optical amplifier and/or a switchable fiber optical amplifier.

According to an embodiment, the first amplifier unit and/or the second amplifier unit may comprise a variable optical attenuator.

In an example, the first amplifier unit and/or the second amplifier unit may comprise at least one amplifier and a variable optical attenuator connected in series.

In the context of the present disclosure, an input coupler unit may comprise or may be any device that is adapted to couple the first input line and the second input line into a common output line.

According to an embodiment, the input coupler unit is a passive optical device that permanently couples the first input line and the second input line into the common output line.

According to an embodiment, the optical network device, and the input coupler unit in particular does not comprise an optical switch to selectively switch between the first input line and the second input line.

This may reduce the complexity and may enhance the robustness of the optical network device.

In some embodiments, the input coupler unit comprises a wavelength-selective switch and/or a star coupler.

According to an embodiment, the optical network device further comprises a wavelength blocker unit downstream of the input coupler unit.

A wavelength blocker unit, in the sense of the present disclosure, may denote a device adapted to separate an incoming multi-wavelength signal into a plurality of spectral slices. The wavelength blocker unit may allow to block or may allow passing and levelling of the optical power of the signal slices contained in the spectral slices. The wavelength blocker unit may then superimpose the spectral slices and signal slices therein.

The optical network device may be or may comprise an optical add/drop multiplexer, in particular a reconfigurable add/drop multiplexer.

An output line, in the context of the present disclosure, may denote any transmission path for optical signals, in particular a transmission path that is adapted to receive an optical output signal from the input coupler unit. In some examples, the output line may comprise an optical fiber.

In an embodiment, the output line may be a unidirectional transmission path. Alternatively, the output line may be a bidirectional transmission path.

In a second aspect, the disclosure relates to a method for operating an optical network unit, comprising the steps of receiving a first optical input signal on the first input line; and receiving a second optical input signal on a second input line, wherein the second optical input signal is a protection signal for the first optical input signal, or vice versa. The method further comprises selectively amplifying the first input signal; selectively amplifying the second input signal; and coupling the first input line and the second input line, such as into an output line.

In the context of the present disclosure, a protection signal may denote a signal that provides redundancy for a transmission signal, such as in case of a failure of the transmission signal. The transmission path of the protection signal may be denoted a protection line.

According to an embodiment, selectively amplifying the first input signal and/or the second input signal may comprise selectively amplifying and/or selectively attenuating or blocking the first input signal and the second input signal, respectively.

In an embodiment, the method further comprises detecting a presence or an absence of the first optical input signal in the first input line.

The method may further comprise detecting a presence or an absence of the second optical input signal in the second input line.

Alternatively or additionally, the method may further comprise detecting a presence or an absence of a third optical input signal in the first input line and/or in the second input line, wherein the third optical input signal is different from the first optical input signal and/or the second optical input signal.

According to an embodiment, the method comprises selectively amplifying the second optical input signal and/or selectively attenuating or blocking the first optical input signal in response to detecting the absence of the first optical input signal in the first input line, and/or in response to detecting the presence or the absence of the third optical input signal in the first input line.

Conversely, the method may comprise selectively amplifying the first optical input signal and/or selectively attenuating or blocking the second optical input signal in response to detecting the absence of the second optical input signal in the second input line, and/or in response to detecting the presence or the absence of the third optical input signal in the second input line.

The disclosure further relates to a computer program or a computer program product comprising computer-readable instructions such that the instructions, when read on a computer, implement a method with some or all of the features described above.

### Brief Description of the Drawings

The features and numerous advantages of the techniques according to the present disclosure will be best apparent from a detailed description of examples with reference to the accompanying drawings, in which:
- Fig. 1a: is a schematic illustration of an optical network device according to an embodiment;
- Fig. 1b: is a schematic illustration of an optical network device according to another embodiment, employing detecting units;
- Fig. 2: schematically illustrates an optical add/drop multiplexer with optical protection according to an embodiment;
- Fig. 3: schematically illustrates an optical add/drop multiplexer employing a wavelength-selective switch according to an embodiment;
- Fig. 4: schematically illustrates a ROADM employing a wavelength-selective switch according to an embodiment;
- Fig. 5: schematically illustrates an optical add/drop multiplexer employing a star coupler according to an embodiment;
- Fig. 6: illustrates an optical add/drop multiplexer with an optical protection scheme employing star couplers according to an embodiment;
- Fig. 7: illustrates a ROADM employing star couplers and a wavelength blocker unit between terminations according to an embodiment;
- Fig. 8: is a schematic illustration of a ROADM using a preamplifier-switch arrangement with an inter-stage variable optical attenuator according to an embodiment;
- Fig. 9: is a schematic illustration of a ROADM using a preamplifier-switch arrangement with an output variable optical attenuator according to an embodiment;
- Fig. 10a: illustrates a ROADM to ROADM connection with signal overhead transportation and with an optical protection according to an embodiment;
- Fig. 10b: illustrates a ROADM to ROADM connection using wavelength selective switches and transponders to transport supervisory channel information;
- Fig. 11: is a schematic illustration of an optical add/drop multiplexer with an upgrade port according to an embodiment;
- Fig. 12: illustrates a ROADM with nodal degree 3 and optical protection according to an embodiment;
- Fig. 13: schematically illustrates a switchable Raman optical amplifier that can be used in an optical network device according to an embodiment;
- Fig. 14: schematically illustrates a switchable semiconductor optical amplifier that can be used in an optical network device according to an embodiment;
- Fig. 15: schematically illustrates a preamplifier-switch arrangement with a single-stage optical amplifier that can be used in an optical network device according to an embodiment;
- Fig. 16: schematically illustrates a preamplifier-switch arrangement with a double-stage optical amplifier that can be used in an optical network device according to an embodiment;
- Fig. 17: schematically illustrates how a preamplifier-switch arrangement is connected to two control lines in an optical network device according to an embodiment; and
- Fig. 18: is a flow diagram that illustrates a method for operating an optical network device according to an embodiment.

### Detailed Description

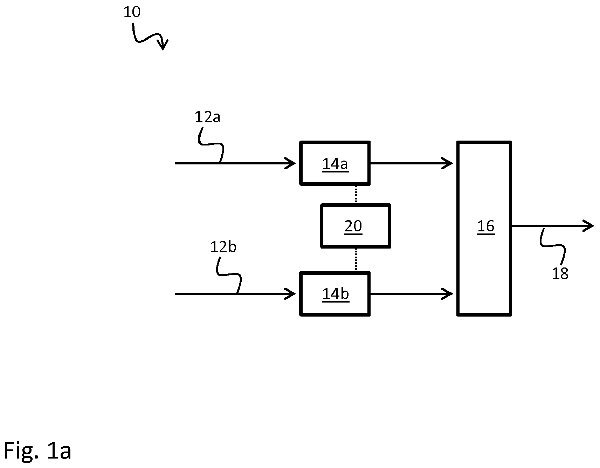

Figure 1a is a schematic illustration of an optical network device 10 in which the techniques of the present disclosure may be employed. In some examples, the optical network device 10 may be an optical add/drop multiplexer, in particular a reconfigurable optical add/drop multiplexer.

The optical network device 10 comprises a first input line 12a and a second input line 12b that is spatially separated from the first input line 12a. The first input line 12a and the second input line 12b may be adapted to receive first and second optical input signals of the optical add/drop multiplexer, such as WDM signals.

For instance, the first input line 12a may represent a working path of the optical network, whereas the second input line 12b may represent a protection line for the first input line 12b, so to provide redundancy in case the first input line 12a fails, such as due to a fiber cut or maintenance. The second optical input signals in the second input line 12b may generally duplicate the protected first optical input signals in the first input line 12a.

The optical network device 10 further comprises a first amplifier unit 14a in the first input line 12a and a second amplifier unit 14b in the second input line 12b. The first amplifier unit 14a and the second amplifier unit 14b may be adapted to selectively amplify the first optical input signal and the second optical input signal, respectively.

As can be further taken from Figure 1a, the optical network device 10 additionally comprises an input coupler unit 16 downstream of the first amplifier unit 14a and the second amplifier unit 14b. The input coupler unit 16 couples the signals received from the first amplifier unit 14a and the second amplifier unit 14b into a common output signal line 18, and the output signals may then be processed further in the optical network device 10. Further signal processing of the output signal line 18 is not shown in Figure 1a, in order to streamline the presentation.

The optical network device 10 of Figure 1a additionally comprises a control unit 20 that is coupled to the first amplifier unit 14a and to the second amplifier unit 14b, such as by means of a wire connection or a wireless connection (shown as a dashed line in Figure 1a). The control unit 20 may be adapted to selectively control the operation of the first amplifier unit 14a and the second amplifier unit 14b.

For instance, the control unit 20 may control the first amplifier unit 14a to amplify the signals in the first input line 12a, which may represent a working path of the optical network. At the same time, the control unit 20 may control the second amplifier unit 14b to attenuate or block the signals in the second input line 12b that represents the protection line for the first input line 12a. This may be achieved by switching on the first amplifier unit 14a and switching off the second amplifier unit 14b.

In case of a fiber cut in the first input line 12a, the control unit 20 may selectively switch off the first amplifier unit 14a, and may trigger the second amplifier unit 14b to amplify the incoming second optical input signals on the second input line 12b. As a result, the input coupler unit 16 still receives the same incoming signals, but now no longer via the first input line 12a but via the second input line 12b and the second amplifier unit 14b, and forwards these signals to the output signal line 18 for further signal processing.

The protection switching may hence be achieved by selectively controlling the first amplifier unit 14a and the second amplifier unit 14b, in combination with a passive input coupler unit 16. In contrast to conventional protection switching, an active protection switch for coupling the first input line 12a and the second input line 12b may not be required. This solution avoids the extra complexity of the conventional protection switch.

Figure 1a shows the control unit 20 as a separate device that is communicatively coupled to the first amplifier unit 14a and the second amplifier unit 14b. However, in other embodiments the control unit 20 may be integrated into one of the amplifier units 14a, 14b.

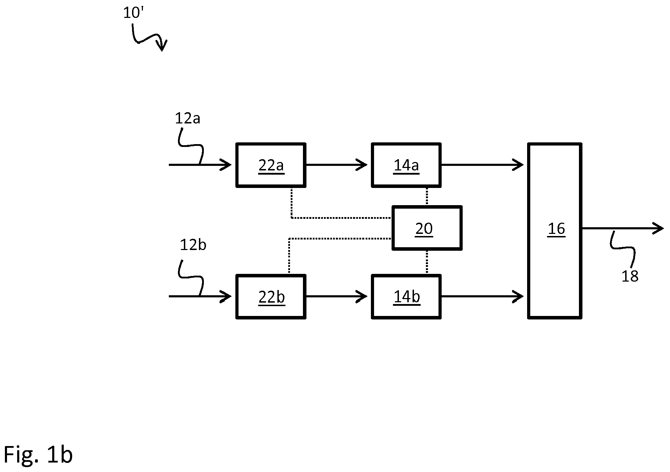

Figure 1b is a schematic illustration of an optical network device 10' that is generally similar to the optical network device 10 described above with reference to Figure 1a, and corresponding components have the same reference numerals.

However, the optical network device 10' further comprises a first detecting unit 22a in the first input line 12a, upstream of the first amplifier unit 14a, as well as a second detecting unit 22b in the second input line 12b, upstream of the second amplifier unit 14b. The detecting units 22a, 22b are communicatively coupled to the control unit 20 via wired or wireless connections (shown as dashed line in Fig. 1b). The first detecting unit 22a is adapted to detect the presence or absence of the first optical input signal in the first input line 12a. Similarly, the second detecting unit 22b is adapted to detect the presence or absence of the second optical input signal in the second input line 12b.

For instance, in case of a fiber cut the first detecting unit 22a detects the absence of the first optical input signal in the first input line 12a, and may inform the control unit 20 accordingly, which in response may deactivate the first amplifier unit 14a and activate the second amplifier unit 14b, as described above with reference to Figure 1a.

Alternatively or additionally, the first detecting unit 22a and/or the second detecting unit 22b may also be adapted to detect a presence or absence of a third optical input signal in the respective first input line 12a or second input line 12b. The third optical input signal may be different from the first optical input signal and/or the second optical input signal, and may be in a spectral range that is unsuitable for the respective first amplifier unit 14a and second amplifier unit 14b, or cannot be amplified by the respective first amplifier unit 14a and second amplifier unit 14b.

For instance, the third input signal may correspond to an optical supervisory channel.

In an example, the first detecting unit 22a detects, in the first input line 12a, the presence or absence of the optical supervisory channel, which may be outside the spectral range that can be amplified by the first amplifier unit 14a. The first detecting unit 22a informs the control unit 20 accordingly, which in response may deactivate the first amplifier unit 14a and activate the second amplifier unit 14b, as described above.

Figures 1a and 1b show a configuration with two input lines 12a, 12b and two corresponding amplifier units 14a, 14b and detecting units 22a, 22b, respectively. However, the protection switching according to the techniques of the present disclosure may be employed similarly for any number of input lines.

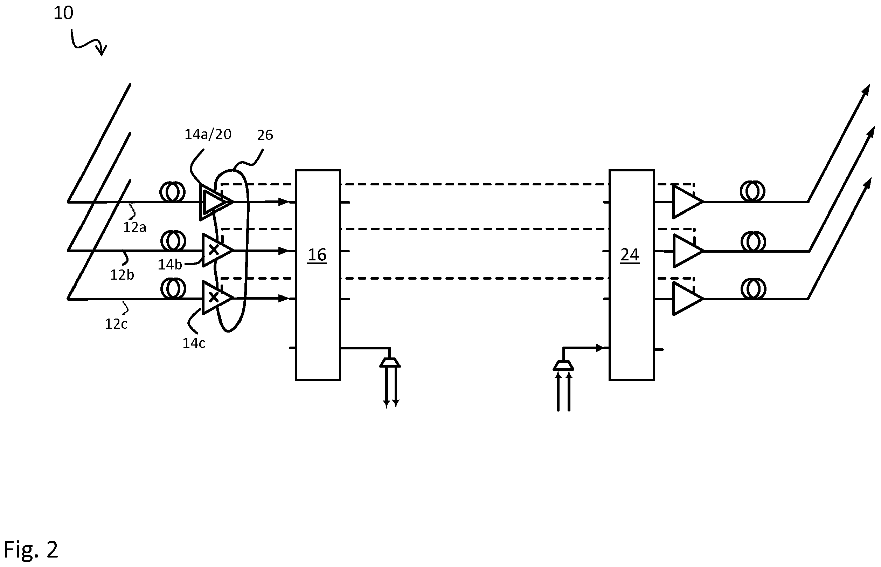

Figure 2 is a schematic illustration of an optical add/drop multiplexer 10 with an optical protection scheme according to the present disclosure.

The termination arrangement shown in Figure 2 has connections to three bidirectional transmission lines 12a, 12b, 12c. Each bidirectional optical transmission line 12a, 12b, 12c ends in an output port for the optical path for incoming signals and an input port for outgoing signals. The bidirectional transmission lines 12a, 12b, 12c can comprise two separate optical fibers, even though other optical transmission arrangements are also possible. For instance, the outgoing and incoming optical signal paths may be combined into a single optical fiber. The termination is adapted to connect to at least two bidirectional transmission lines.

Each termination optical transmission input line 12a, 12b, 12c can be connected to a corresponding optical amplifier 14a, 14b, 14c. The amplifiers 14a, 14b, 14c in connection with further elements that may couple to the input coupler unit 16 via the input lines 12a, 12b, 12c may be denoted a preamplifier-switch arrangement, in the context of the present disclosure.

In general, the input coupler unit 16 may have at least two input ports and one or more output ports. The input coupler unit 16 therefore may have Ni_ix Ni_o ports with Ni_i>= 2 and Ni_o >= 1.

The input coupler unit 16 may have several tasks in the network:
- The input coupler unit 16 brings together the optical paths leaving the preamplifier-switch arrangements. Optical protection can be executed if there is at least one worldng optical path and at least one protecting optical path. Embodiments of the present disclosure support more than two paths, but each extra optical path may add optical loss to the input coupler arrangement.
- The input coupler unit 16 can split the optical path of signals being forwarded to the inner portion of the optical add/drop multiplexer 10, 10'. This splitting may also add optical loss to the input coupler arrangement.

An embodiment of the input coupler unit 16 contains a wavelength selective switch.
- It can preselect input ports used for power combining. This preselection limits the extra optical loss, which is inherently present for an input coupler arrangement containing a power combiner with more than two input ports. The preselection of ports can be done differently for different spectral portions of the managed multi-wavelength signal.
- It can switch different spectral portions of the managed multi-wavelength signal to different output ports. The switching instead of a broadcasting may limit the extra optical loss, which is inherently present for an input coupler arrangement containing a power splitter for broadcasting the managed multi-wavelength signal.

The wavelength selective switch may contain a switching layer with a spatial light modulator relying, for instance, on Liquid Crystal on Silicon (LCoS) technology or micro-electrical mechanical system (MEMS) technology.

The wavelength selective switch may additionally comprise a computer-readable medium including computer-readable instructions pertaining to the configuration of the wavelength selective switch.

In other embodiments, the input coupler unit 16 comprises a power combiner or a star coupler. For up to two output ports a star coupler generally does not add any extra loss, given that two input ports may be required for optical protection anyway.

Even though the techniques of the present disclosure reside mostly in the input portion of the device termination, appropriated means for reconfiguration (such as a wavelength blocker or wavelength selective switch) and output portions of the termination (such as an output coupler arrangement) are likewise described herein to provide context.

As shown in Figure 2, the optical add/drop multiplexer 10 may further comprise an output coupler unit 24. The output coupler unit 24 has one or more input ports and at least two output ports. The output coupler unit 24 brings together the optical paths from the one or more input ports, which may connect to further signal processing devices or further terminations. The at least two outputs may have connection to transmission fibers.

In an example, the output coupler unit 24 may contain a wavelength selective switch with a special configuration for broadcasting into two optical paths arriving at the one or more input ports. The wavelength selective switch may further comprise a computer readable medium including computer-readable instructions pertaining to configuration information.

In another example, the output coupler unit 24 may contain a power splitter or a star coupler. For up to two input ports no extra loss is added in this case, given that two output ports may be required for optical protection anyway.

The one or more output ports of the input coupler unit 16 can have a connection to a signal processing device or to an input port of the output coupler unit 24 of a further termination.

The one or more input ports of the output coupler unit 24 can in turn be connected to a signal processing device or to an output port of the input coupler unit of a further termination.

The signal processing device can for instance be an optical amplifier, a variable optical attenuator or a switch, a filter, a wavelength blocker, an opto-electrical receiver or an electro-optical transmitter or transponder, an optical frequency converter or an optical regenerator, an optical splitter or combiner, a demultiplexer or a multiplexer or a wavelength selective switch.

The optical add/drop multiplexer can also have booster amplifier arrangements to amplify the signal before feeding it into the transmission fiber. Each preamplifier-switch arrangement with related booster amplifier arrangement can have a connection to a further communication line, as illustrated by a dashed line in Figure 2.

In some embodiments, only signals of one incoming optical signal path may be transported through the optical add/drop multiplexer 10. For instance, let us assume that the uppermost signal path 12a is used for this purpose. The preamplifier-switch arrangement of the optical signal path 12a in use is in on-state, which means the first amplifier unit 14a is amplifying. In contrast, the amplifier units 14b, 14c of the other optical signal paths 12b, 12c may be in an off-state, which means that the optical signal path 12b, 12c of each of these preamplifier-switch arrangements is highly attenuating. The blocking of the signals of the preamplifier-switch arrangements of other optical signal paths is indicated in Figure 2 by means of a cross in the respective amplifier units 14b, 14c.

A preamplifier-switch arrangement may erroneously lose electrical power support. Advantageously, the high attenuation or blocking of optical power emission is activated in this case. This suppression of optical power emission in case of an error can be denoted as normal-off behavior.

As further shown in Figure 2, the amplifier units 14a, 14b, 14c of the termination are communicatively coupled via a common bidirectional communication line 26, which allows the amplifier units 14a, 14b, 14c to coordinate the protection switching.

In the configuration of Figure 2, there may be at least one controller unit 20 managing the protection switching. The controller unit 20 may know how many preamplifier-switch arrangements are available in the termination. The controller unit 20 may manage which preamplifier-switch arrangement is in an on-state and which is in an off-state. In case of more than two preamplifier switch arrangements as shown in Figure 2, the controller unit 20 may know which amplifier unit 14a, 14b, 14c should be brought into on-state in case the transmission of signals through the preamplifier-switch arrangement in the on-state fails.

Let us assume that the optical transmission fiber 12a in use is cut. In this case, loss of signal may be detected by a photodetector within the first amplifier unit 14a, and the first amplifier unit 14a is brought into an off-state. This change of state may be communicated via the communication line 26 to the amplifier unit that is foreseen to take over signal transmission through the OADM 10, say the second amplifier unit 14b. The second amplifier unit 14b will be activated and brought into an on-state.

It may be advantageous to have protection or redundancy also for the control. To this end, more than one controller unit for managing protection switching may be in place, even though this is not shown in Figure 2.

In some embodiments, control functionality may be provided in each of the amplifier units 14a, 14b, 14c, because then at least two controllers are in place as soon as two such preamplifier-switch arrangements are equipped. It can be advantageous to assign the protection control master function to one of the amplifier units 14a, 14b, 14c. In the configuration of Figure 2, the master function is assigned to the controller in the uppermost amplifier unit 14a. This is illustrated in Figure 2 by the double frame around the uppermost amplifier unit 14a.

If the amplifier unit having the control master role is deactivated or removed from the termination, the controller of another preamplifier-switch arrangement may take over the control master role.

It can be advantageous to have protection or redundancy also for the bidirectional communication line 26 between the preamplifier-switch arrangements. One solution is a communication line 26 with a ring architecture, as shown in Figure 2. The optical protection scheme then remains in operation if the communication line ring 26 between two preamplifier-switch arrangements is opened.

Figure 2 suggests that only the amplifier unit 14a is in its on-state. However, in other examples further amplifier units may likewise be on, such as when the corresponding input lines transport signals in different spectral slices.

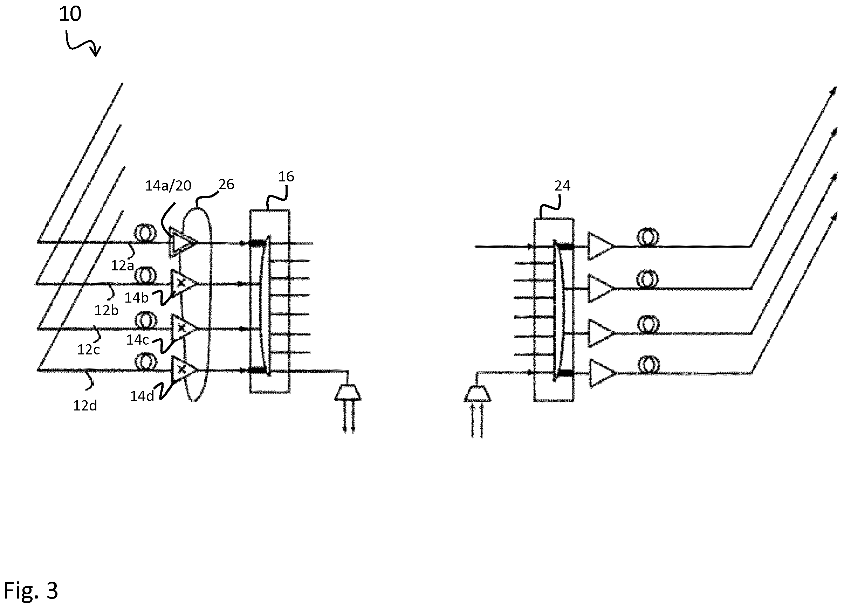

Figure 3 shows an optical add/drop multiplexer 10 that is generally similar to the optical add/drop multiplexer described above with reference to Figure 2. However, the optical add/drop multiplexer of Figure 3 has four input lines 12a - 12d and four respective amplifier units 14a - 14d connected to the input coupler unit 16. Again, the termination may be connected to bidirectional transmission lines. The four optical transmission input ports each employ a transmission fiber 12a - 12d and an optical amplifier unit 14a - 14d.

The communication lines between the respective amplifier units 14a - 14d and the booster arrangement of the output coupler unit 24 are not shown in Figure 3, for the sake of clarity.

The input coupler unit 16 comprises a wavelength selective switch with port count Ni_ix Ni_o. Its input portion may function similarly to a combiner for the at least two of the at least two input ports configured for forwarding incoming signals to output ports. In Figure 3, the uppermost input 12a and the lowest input 12d may be selected for the combiner function. The selection for the combiner function is indicated in Figure 3 by an enhanced line thickness in the corresponding two inputs of the input coupler unit 16. The wavelength selective switch output portion routes signals in these paths to one or more output ports, which may have connection to signal processing devices or further terminations.

For some applications, a transponder signal with preselected wavelength range may transport the optical transport network signal overhead information of the working optical path, while this preselected wavelength range may be unused in the protecting optical path. For other applications, a transponder signal with a possibly different preselected wavelength range may transport the optical transport network signal overhead information of the protecting optical path, while the possibly different preselected wavelength range may be unused in the working optical path.

The output signals of the first termination are selected by an output coupler unit 24 with at least two outputs ports. The output coupler arrangement contains a wavelength selective switch with port count No_ix No_o. It selects the signals from input ports, which may connect to signal processing devices or further terminations, and routes them to at least two of the at least two output ports. The at least two optical transmission outputs ports have connection to transmission fibers.

For some applications, a transponder signal with a preselected wavelength range may transport the optical transport network signal overhead information of the working optical path, while this preselected wavelength range may be unused in the protecting optical path. For other applications, a transponder signal with a possibly different preselected wavelength range can transport the optical transport network signal overhead information of the protecting optical path, while the possibly different preselected wavelength range may be unused in the working optical path.

If the optical transport network signal overhead information is transported via a transponder signal passing the preamplifier-switch arrangements, either the output coupler or the input coupler or both could comprise WSS being configured to execute dedicated routing from one of the input ports to a preselected output port.

The wavelength selective switch can employ liquid crystal on silicon technology. A 4 x 8 wavelength selective switch is shown in the input coupler unit 16 of Figure 3.

The wavelength selective switch may further comprise a computer readable medium including program code in the form of computer-readable instructions defining configuration information. The wavelength selective switch may further comprise a control element configured to control the wavelength selective switch to adopt which at least two input ports of the wavelength selective switch are selected for combining optical paths. The input coupler unit 16 may have only two input ports. In this case it may be a good choice to use a 2 x 1 combiner followed by 1 x Ni_o wavelength selective switch.

A 8 x 4 wavelength selective switch is shown in Figure 3 as the output coupler unit 24. The wavelength selective switch may further comprise a computer readable medium including a program code defining configuration information, and a control element configured to control the wavelength selective switch to adopt which at least two output ports of the wavelength selective switch are selected for broadcasting into optical paths. The output coupler unit 24 may have only two output ports. In this case it may be a good choice to use a 2 x 1 wavelength selective switch followed by a 1 x 2 splitter.

Again, the OADM can have booster amplifier arrangements to amplify the signal before feeding it to the transmission fiber. Each preamplifier-switch arrangement with related booster amplifier arrangement can have a connection to a further communication line.

Advantageously, testing of subcomponents relevant for protection switching can be done during normal operation of the optical add/drop multiplexer 10. A test routine of a preamplifier-switch arrangement in an off-state can be implemented in a multi-stage preamplifier-switch arrangement. Furthermore, the input coupler unit 16 can configure another input port to be part of the combiner function so that testing of amplifier-switch arrangements can be extended.

Figure 3 illustrates one amplifier unit 14a in its on-state. However, additional amplifier units may be on, such as when the corresponding input lines transport signals in different spectral slices. In this case, the WSS combiner functionality of the input coupler unit 16 may be adapted accordingly. For instance, a first set of signals in related spectral slices may be transported via input lines 12a, 12d, as illustrated in Figure 3. A second set of signals in related different spectral slices may be transported via input lines 12b, 12c, but for the sake of clarity that is not illustrated in Figure 3.

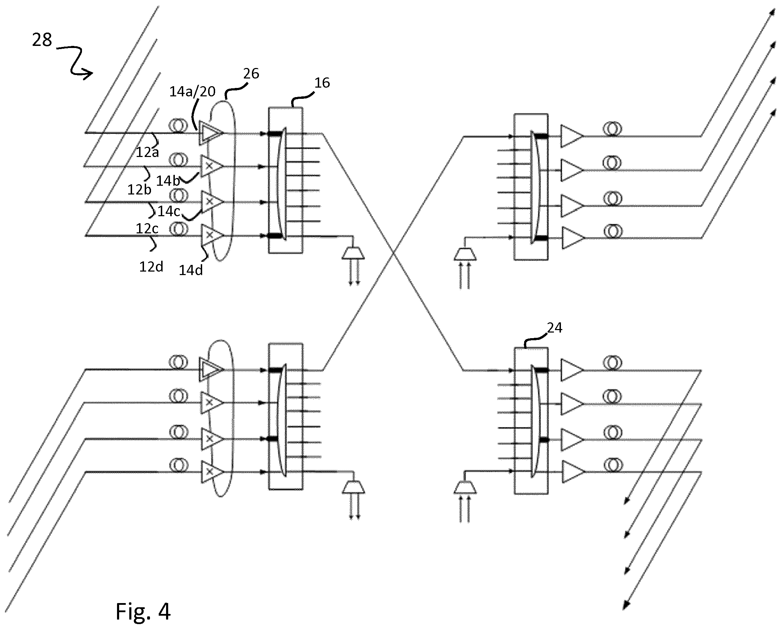

Figure 4 shows a reconfigurable optical add/drop multiplexer 28 with two terminations according to an embodiment. The ROADM 28 is constructed by connecting two largely identical OADMs 10 with single termination of the type described above with reference to Figure 3. The resulting ROADM 28 has nodal degree 2, which means it has two terminations which can connect to remote locations.

In the configuration of Figure 4, the upper termination is configured to use transmission fiber pair one and four for protected transmission. The lower termination is configured to use fiber pairs one and three for protected transmission.

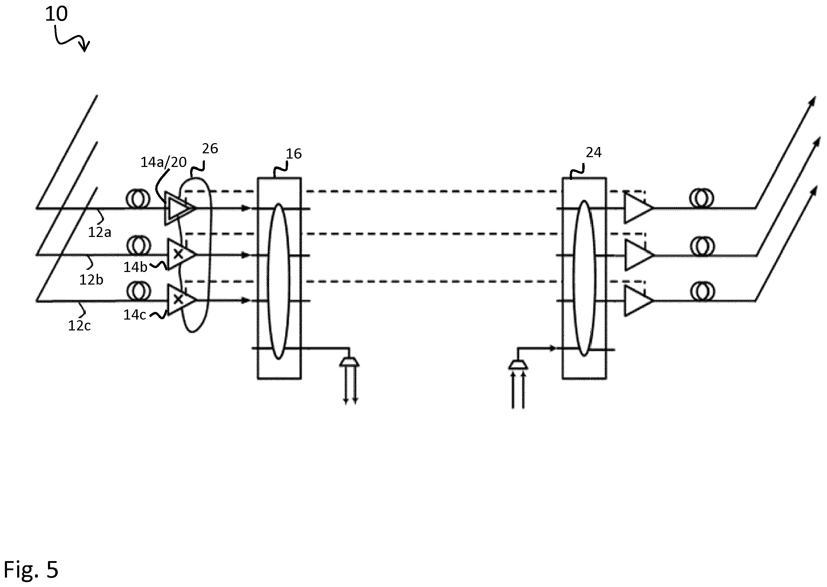

Figure 5 shows an optical add/drop multiplexer 10 that generally corresponds to the configuration of Figure 2 described above, but with star couplers as the input coupler unit 16 and the output coupler unit 24.

Again, the termination is connected to bidirectional transmission lines 12a, 12b, 12c. The input coupler unit 16 broadcasts the incoming signals incoming to ports, which may have connection to further signal processing devices or further terminations.

The first termination outgoing signals are superimposed by an output coupler unit 24 with at least two outputs. It superimposes the signals from ports, which may connect to further signal processing devices or potentially further terminations. The at least two outputs may have connection to transmission fibers.

Input and output coupler units 16, 24 can advantageously be constructed by state-of-the-art star couplers, such as a planar waveguide circuit with silica on silicon. In the example of Figure 5, a 4 x 4 coupler is shown. Fused fiber couplers are also possible, depending on port count.

Again, the OADM 10 can have booster amplifier arrangements to amplify the signal before feeding it to the transmission fiber. Each preamplifier-switch arrangement with related booster amplifier arrangement can have a connection to a further communication line, as illustrated by a dashed line in Figure 5.

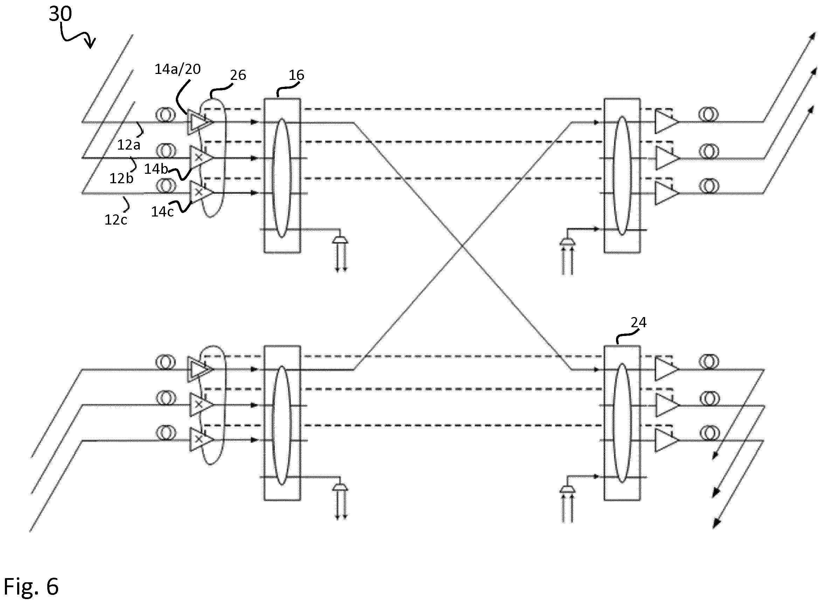

Figure 6 shows an optical add/drop multiplexer 30 with terminations according to an embodiment. The OADM 30 may be constructed by connecting two OADMs 10 with terminations as described above with reference to Figure 5. The resulting optical add/drop multiplexer 30 has nodal degree 2, which means it has two terminations which can connect to remote locations.

The upper half of Figure 6 shows termination 1 and the related transmission fiber pairs, whereas the lower part shows termination 2 and the related transmission fibers pairs.

Let us consider by way of example termination 1. As before, incoming signal paths 12a, 12b, 12c employ a transmission fiber and an optical preamplifier-switch arrangement, each. The preamplifier-switch arrangements may have connection to a Ni_i x Ni_o input coupler unit 16, with Ni_i>= 2.

As before, the input coupler unit 16 may broadcast the incoming signals to further signal processing devices (e.g., a demultiplexer) and to termination 2. Termination 1 outgoing signals are superimposed by a No_ix No_o output coupler unit 24, with No_o >= 2. It may collect the signals from a further signal processing device (e.g., a multiplexer) and from termination 2. The two outputs of the No_i x No_o output coupler unit 24 may forward the superimposed signals to transmission fibers.

As before, only signals of one incoming signal path are transported through the optical add/drop multiplexer. As before, the at least two preamplifier-switch arrangements of the termination have connection to a common bidirectional communication line.

Termination 2 can be constructed similarly to termination 1.

The protection scheme is illustrated herein for a colorless interconnection between the terminations. However, the interconnection can also be done via optical filters with ports assigned to fixed frequencies, or via tunable filters.

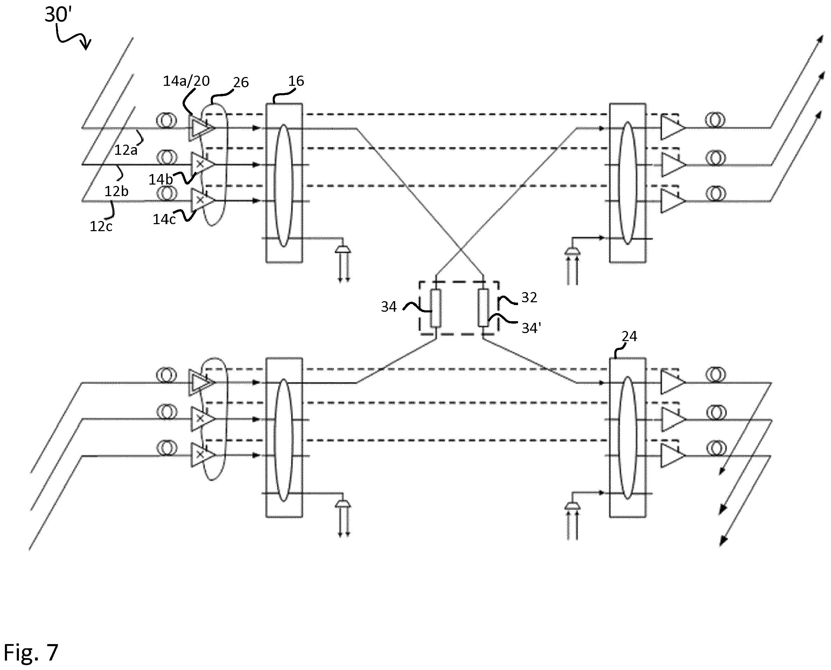

Figure 7 shows a reconfigurable optical add/drop multiplexer 30' with terminations that is generally similar to the add/drop multiplexer 30 described above with reference to Figure 6, and the same reference numerals are employed to label corresponding parts.

However, the optical add/drop multiplexer 30' in addition comprises a wavelength blocker unit 32 comprising two wavelength blockers 34, 34' in the bidirectional path, downstream of the input terminations, wherein the pair of wavelength blockers 34, 34' connect the terminations.

In the context of the present disclosure, the wavelength blocker 34, 34' may be a device which separates incoming multi-wavelength signal into spectral slices. The wavelength blocker 34, 34' may allow configurations to block or allow passing and leveling of optical power of the signal slices contained in the spectral slices. The wavelength blocker 34, 34' may then superimpose the spectral slices and signal slices therein. The resulting optical add/drop multiplexer 30' may have broadcast and select architecture.

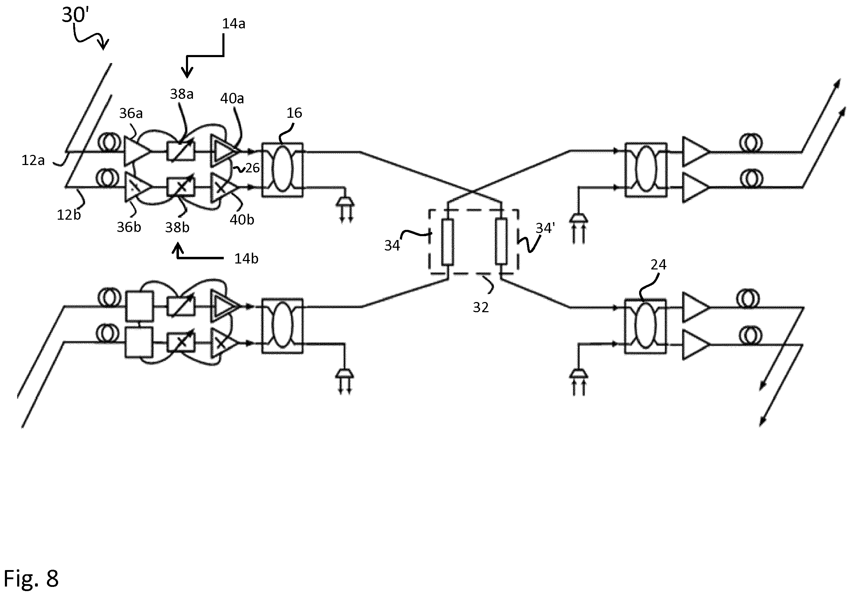

Figure 8 shows a ROADM 30' with terminations that are generally similar to the ROADM described above with reference to Figure 7, but with different preamplifier-switch arrangements. For simplicity, the terminations have an input coupler unit 16 and an output coupler unit 24 with the smaller port count 2 x 2. Up to two transmission fiber pairs, related preamplifier-switch arrangements and booster amplifier arrangements are possible and shown. The communication line between the preamplifier and booster arrangement is not shown for the sake of clarity. Again, the two preamplifier-switch arrangements of a termination are connected by bidirectional communication lines 26.

In each termination, the upper fiber pair is part of the working signal path, and the lower fiber pair is part of the protecting signal path.

Let us consider termination 1. The working incoming signal path and the protecting incoming signal path after the transmission fiber for the incoming signal may both employ a preamplifier-switch arrangement 14a, 14b comprising an optical amplifier 36a, 36b with a fiber being doped to provide amplification when optically pumped (e.g. Er-doped fiber amplifier), followed by a mid-stage variable optical attenuator (VOA) 38a, 38b or a switch and a further optical amplifier 40a, 40b with doped fiber.

As before, only signals of one incoming signal path are transported through the ROADM 30'. In a typical operation, the working path preamplifier-switch arrangement 14a may be in an on-state, and the protecting path preamplifier-switch arrangement 14b may be in an off-state, as illustrated by crosses within the components of the protecting signal path in Figure 8.

If the working path 12a is used, its preamplifier-switch arrangement 14a is in the on-state, which means it is amplifying. Particularly, its VOA 38a is adjusted to the on-state, which means it is adjusted to transparency or attenuation with a strength appropriate for signal transmission through the ROADM 30'. The protecting path preamplifier-switch-arrangement 14b is in off-state, which means it is blocking signal transmission. By way of example, its VOA 38b is adjusted to off-state, which means it is set to an attenuation too low for reasonable signal transmission. The amplifier 36b upstream of the VOA 38b may be set to an off-state or standby-state, to improve incoming signal blocking. This setting may be done autonomously by detecting loss of signal or triggered via the communication line 26. A standby-state may mean that the related amplifier pump arrangement feeds only little energy to the optically amplifying medium so that the preamplifier is essentially transparent for signals or slightly amplifying. If the amplifier 36b upstream of the VOA 38b is in stand-by state, the input signal can be monitored, even if the preamplifier-switch arrangement 14b is in off-state. Stand-by state is illustrated in Figure 8 by a cross having one dashed line. It may be advantageous to set the amplifier 40b downstream of the VOA 38b to off-state to avoid emission of optical broadband noise into the input coupler unit 16.

Let us assume that the working path signals are transmitted through the ROADM 30', and that the fiber before the preamplifier-switch arrangement 14a is cut. In this example, a loss of signal may be detected by a photodetector within the preamplifier-switch arrangement 14a, and the preamplifier-switch arrangement 14a may be brought into off-state. The loss of signal may be communicated to the preamplifier-switch 38b of the protecting path 12b, and the protecting path preamplifier-switch arrangement 14b may be brought into on-state.

Consider termination 2. Incoming working signal path and protecting signal path after the transmission fiber both may employ a preamplifier-switch arrangement comprising a Raman pump followed by a variable optical attenuator (VOA) and a further optical amplifier with doped fiber.

Either the signals of the working incoming signal path or of the protecting incoming signal path are transported through the ROADM. In a typical operation, the working path preamplifier-switch arrangement is in an on-state and the protecting path preamplifier-switch arrangement is in an off-state, as illustrated. The protecting path Raman pump may nevertheless remain in an on-state.

Again, let us assume that the working path signals are transmitted through the ROADM, and that the fiber before the preamplifier-switch arrangement is cut. By way of example, as soon as the working path Raman pump detects a loss of an optical supervisory channel, it informs the subsequent VOA and the amplifier with doped fiber, and these subsequent components go into an off-state. The working path Raman pump may turn off autonomously for laser safety reasons. The protecting path VOA and amplifier with doped fiber are informed via the communication line and go into an on-state.

The arrangement also can work without an amplifier in front of the VOA or switch, provided means for detecting loss of signal or loss of optical supervisory channel remain in place.

Advantageously, subcomponents relevant for protection switching can be tested during normal operation of the optical add/drop multiplexer. E.g., the mid-stage VOA can be brought into a stand-by state or an on-state, or the switch can be brought into an on-state just for testing, if the amplifier in front of it is brought from stand-by state to off-state, and the subsequent amplifier is in off-state. A VOA in stand-by state is not fully blocking incoming signal, but it may allow for an operational test.

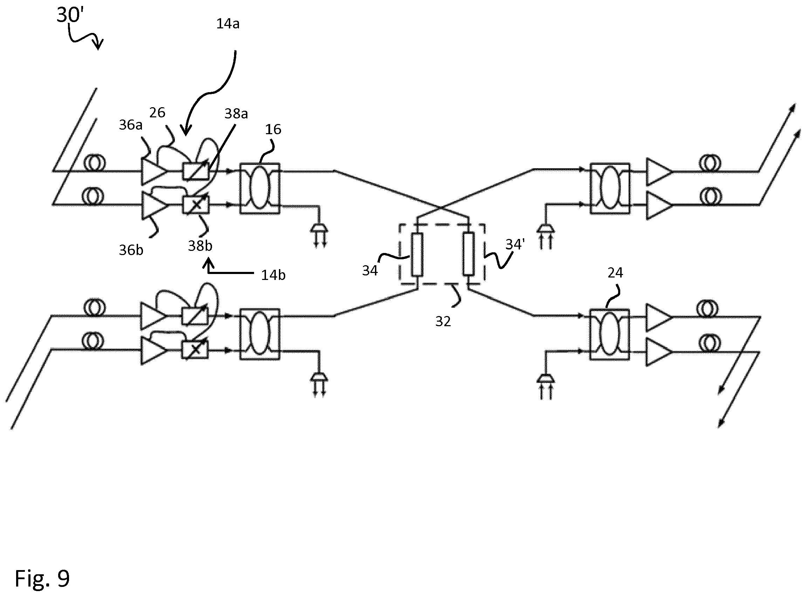

Figure 9 shows ROADM 30' that is generally similar to the configuration described above with reference to Figure 8, but with terminations having amplifiers 36a, 36b with doped fiber followed by a VOA 38a, 38b or switch. A communication line 26 with chain arrangement is shown, but a ring could be completed by adding further communication line segments.

Advantageously again, subcomponents relevant for protection switching can be tested during normal operation of the optical add/drop multiplexer 30'. E.g. the VOA 38a, 38b can be brought into a stand-by state or the switch can be brought into an on-state just for testing, if the amplifier 36a, 36b in front of it is brought from stand-by state to off-state.

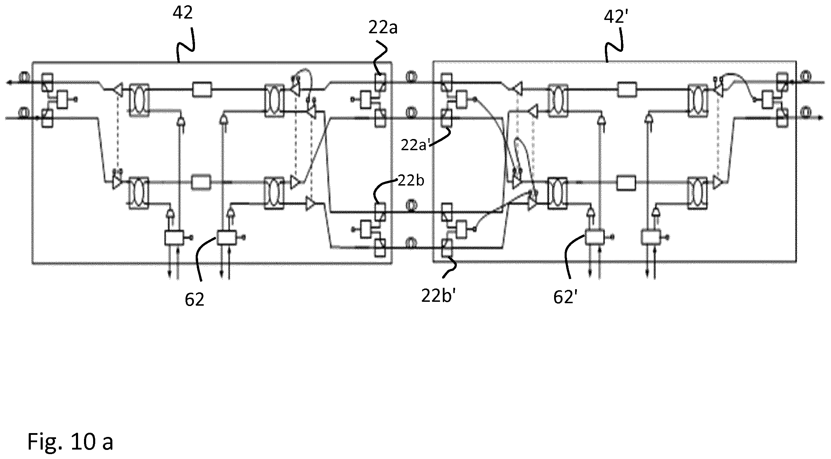

Figure 10a shows two ROADMs 42, 42' with similar architectures as described above with reference to Figures 1 to 9, and their connection via two optical transmission fiber pairs. Means are schematically shown to access optical supervisory channels. These means can be used if the protection scheme according to the present disclosure is used for optical multiplex section protection in multi-wavelength optical networks.

More than one transponder can be connected to a termination via the demultiplexer and multiplexer, even though only one transponder per termination is shown in Figure 10a.

Again, the terminations employ two transmission fiber pairs, related preamplifier-switch arrangements and booster amplifier arrangements, input and output couplers, and a wavelength blocker pair connecting the two couplers.

With reference to Figure 10a, a unidirectional optical path including a transmission fiber for a transmission of an optical channel through a multi-wavelength optical network can go as follows. At the location of the ingress ROADM, an optical channel leaving a first transponder enters the multiplexer and becomes part of a multi-wavelength signal. It proceeds via the output coupler to the booster amplifier arrangement incorporating a booster amplifier and an optical supervisory channel access filter. The signal proceeds further to the transmission fiber input. The signal is transmitted to the egress ROADM location, where it leaves the fiber at the transmission fiber output. The multi-wavelength signal passes the optical supervisory channel access filter and is then fed to the preamplifier-switch arrangement. Next it passes the input coupler and arrives either at the demultiplexer, and further enters a second transponder, or it passes a wavelength blocker and output coupler, where it becomes part of another multi-wavelength signal. The optical transport network signal overhead information can be transmitted along this path by the optical supervisory channel.

Two opposing paths may form a first bidirectional optical transmission path arrangement, i.e., the working path arrangement. The two ROADMs 42, 42' may be additionally connected by a further bidirectional optical transmission arrangement, i.e., the protecting path arrangement. Hence, the signal transmission between the two ROADMs is optically protected.

In Figure 10a, the upper transmission fiber pair is part of the working signal path, whereas the lower transmission fiber pair is part of the protecting signal path.

The ROADM termination has on its incoming side in the optical path after transmission fiber, an optical supervisory channel access filter and a preamplifier-switch arrangement. The ROADM termination has on its outgoing side an optical supervisory channel access filter in the optical path after the booster amplifier. The optical supervisory channel signals are processed in a control unit shown schematically.

The optical supervisory channel access filters can be separate as shown in Figure 10a, or can be part of the preamplifier-switch arrangement and of the booster amplifier arrangement, respectively.

The right-hand side ROADM 42' has additionally a communication line between the optical supervisory channel control unit and the related preamplifier-switch arrangement. This additional communication line is illustrated by a solid line in Figure 10a. The optical supervisory channel presence detection and other information read from the optical supervisory channel signal can be reported to the control unit managing the protection switching.

In case of a fiber break between the right-hand side ROADM 42' and the left-hand side ROADM 42, the fiber break can be detected in the downstream left-hand side ROADM 42, and a switching of the preamplifier-switch arrangements can be triggered. But the upstream right-hand side ROADM 42' should also be informed upon fiber break, to achieve switching.

The ROADM 42 shown on the left-hand side has a preamplifier on its incoming side and a booster amplifier on its outgoing side. They are connected by the further communication line illustrated by a dashed line. If the fiber breaks upstream of this preamplifier, this booster amplifier can be informed via the further communication line. This booster amplifier arrangement can be shut down to inform the ROADM 42' shown on the right-hand side upon fiber break. Also, the fiber break information can be inserted into an optical supervisory channel signal leaving the ROADM 42 shown on the left-hand side toward the ROADM 42' shown on the right-hand side.

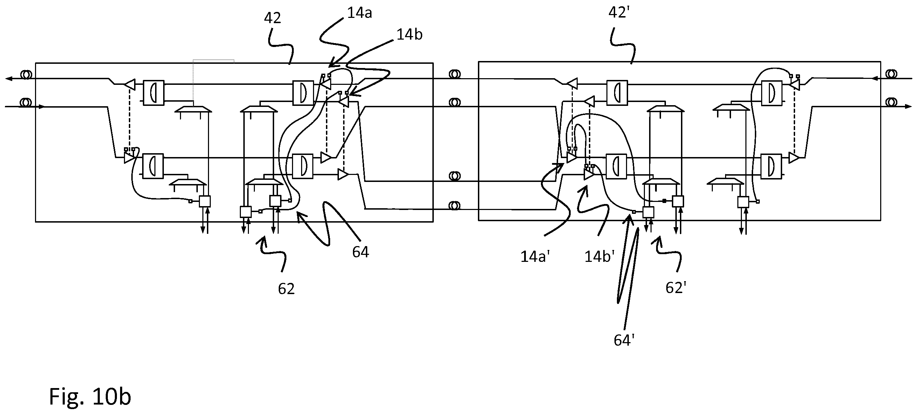

Figure 10b shows two ROADMs 42, 42' with similar architectures as described above with reference to Figures 1 to 4 and 10a, and their connection via two optical transmission fiber pairs. Means are further schematically shown to access general communication channel signals transported within transponder signals dedicated to the working parts and protecting parts, respectively. These means can be used if the protection scheme according to the present disclosure is used for optical multiplex section protection in multi-wavelength optical networks.

More than one or, as shown, more than two transponders 62, 62'can be connected to a termination via the demultiplexer and multiplexer. Up to two transponders per termination are shown in Figure 10b.

Again, the terminations employ two transmission fiber pairs, related preamplifier-switch arrangements 14a, 14b and 14a', 14b' and booster amplifier arrangements and input and output couplers realized by wavelength selective switches.

With reference to Figure 10b, a unidirectional optical path including a transmission fiber for a transmission of an optical channel through a multi-wavelength optical network can go as follows. At the location of the ingress ROADM, an optical channel leaving a first transponder enters the multiplexer and becomes part of a multi-wavelength signal. It proceeds via the output WSS to the booster amplifier arrangements. The signal proceeds further to the transmission fiber input. The signal is transmitted to the egress ROADM location, where it leaves the fiber at the transmission fiber output. The multi-wavelength signal is then fed to the respective preamplifier-switch arrangement 14a, 14b or 14a', 14b'. Next it passes the input coupler WSS and arrives either at the demultiplexer, and further enters a second transponder, or it passes an output coupler WSS, where it becomes part of another multi-wavelength signal.

The optical transport network signal overhead information can be transmitted along this path by the general communication channel of the transponder signal. For instance, the optical transport network signal overhead information of the working parts may be transported via the general communication channel between the transponders 62 in the network element 42 and the transponders 62' in the network element 42'. For instance, the optical transport network signal overhead information of the protecting parts may be transported via the general communication channel between the transponders 62 in the network element 42 and the transponders 62' in the network element 42'.

Two opposing paths may form a first bidirectional optical transmission path arrangement, i.e., a working path arrangement. The two ROADMs 42, 42' may be additionally connected by a further bidirectional optical transmission arrangement, i.e., a protecting path arrangement. Hence, the signal transmission between the two ROADMs is optically protected.

In Figure 10b, the upper transmission fiber pair is part of the working signal path, whereas the lower transmission fiber pair is part of the protecting signal path.

The ROADM termination has on its incoming side in the optical path after transmission fiber a preamplifier-switch arrangement 14a, 14b, 14a', 14b'. The ROADM termination has on its outgoing side a booster amplifier. The signal overhead information can be processed in a control unit located within preamplifier-switch arrangements 14a, 14b, 14a', 14b', as shown schematically in Fig. 10b.

The ROADMs 42 and 42' have additionally communication lines 64, 64' between transponders 62, 62' and the associated preamplifier-switch arrangements 14a, 14b, 14a', 14b'. These additional communication lines 64, 64' are illustrated by solid lines in Figure 10b. The signal overhead presence detection and other information read from general communication channel signals can be reported to the control unit managing the protection switching.

In case of a fiber break between the right-hand side ROADM 42' and the left-hand side ROADM 42, the fiber break can be detected in the downstream left-hand side ROADM 42, and a switching of the preamplifier-switch arrangements 14a, 14b can be triggered. But the upstream right-hand side ROADM 42' should also be informed upon fiber break, to achieve switching.

The ROADM 42 shown on the left-hand side has a preamplifier 14a, 14b on its incoming side and a booster amplifier on its outgoing side. They are connected by the further communication line illustrated by a dashed line. If the fiber breaks upstream of this preamplifier 14a, 14b, this booster amplifier can be informed via the further communication line. This booster amplifier arrangement can be shut down to inform the ROADM 42' shown on the right-hand side upon fiber break. Also, the fiber break information can be inserted into a signal overhead information channel leaving the ROADM 42 shown on the left-hand side toward the ROADM 42' shown on the right-hand side.

Figure 2 illustrates that a further preamplifier-switch arrangement can be connected if the input coupler unit 16 provides a further port. However, a further preamplifier switch arrangement can also be connected if a preamplifier-switch arrangement offers an upgrade port.

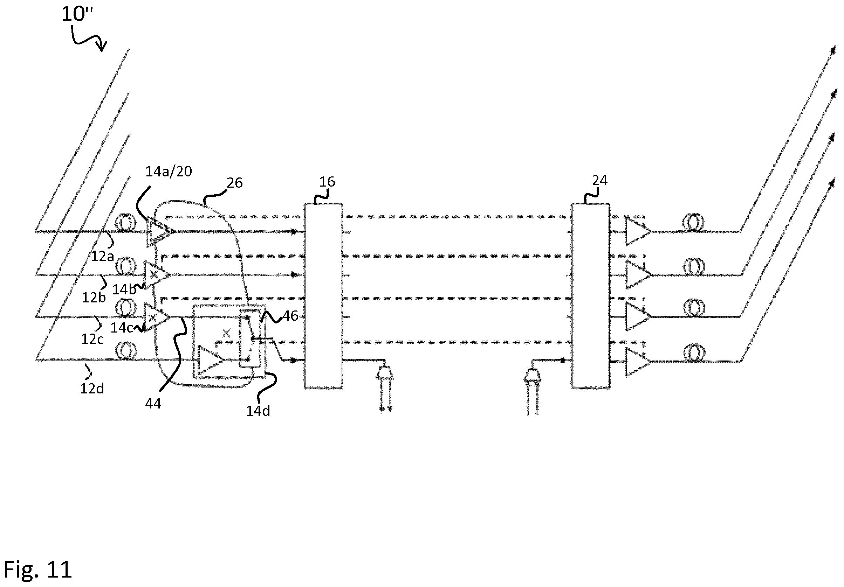

Figure 11 shows an optical Add/drop multiplexer 10" that is generally similar to the configuration described above with reference to Figure 2. However, the lowest positioned preamplifier-switch arrangement 14d in Figure 11 shows such an upgrade port 44, and the connection to such a further preamplifier-switch arrangement 14c. The upgrade port 44 of the preamplifier-switch arrangement can be realized by a 2 x 1 switch 46 at the preamplifier output. This switch 46 may realize the change between an on-state and an off-state. In the off-state of the preamplifier-switch arrangement 14d, the upgrade port 44 can be used to offer an optical path with low optical loss between the upgrade port 44 and the input of the input coupler unit 16.

Advantageously, the connection between the upgrade port 44 and the output of the 2 x 1 switch 46 gets low optical attenuation if the switch 46 loses electrical power support. Thereby the further preamplifier-switch arrangement 14c can be used, because the preamplifier-switch arrangement 14d with upgrade port 44 is in its off-state (exhibits normally off behavior) and offers connection for the further preamplifier-switch arrangement 14c via the upgrade port 44. This can be denoted as normal-on behavior of the upgrade port connection of the preamplifier-switch arrangement 14d.

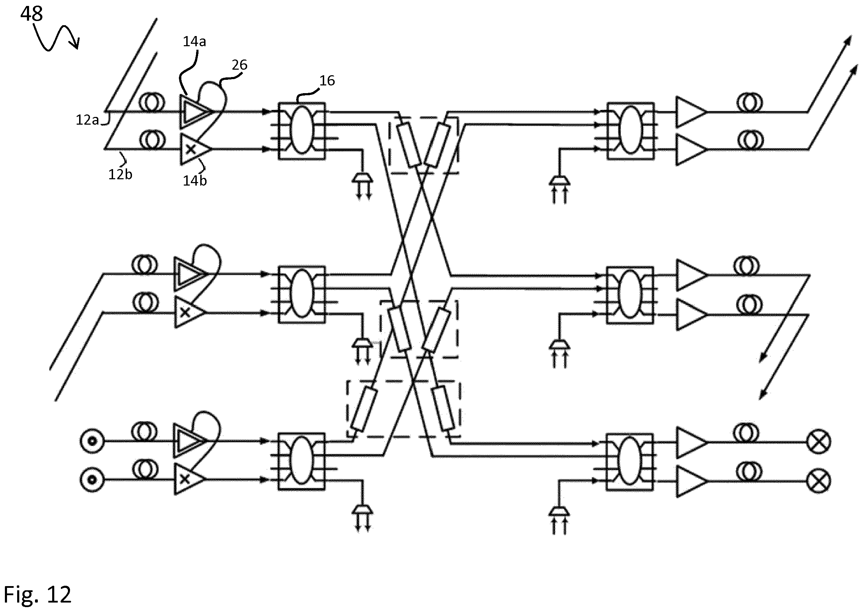

Figure 12 shows ROADM 48 with terminations similarly to Figure 7, but with nodal degree 3. It may obtained by adding a further termination and connect it to the terminations 1 and 2 by wavelength blocker groups of two. The terminations connect to two transmission fiber pairs, even though the input coupler unit 16 and the output coupler port count allows to connect to up to four transmission fiber pairs, related preamplifier-switch arrangements and booster amplifier arrangements. The communication line between the preamplifier and the booster arrangement is not shown for the sake of clarity. Preamplifier-switch arrangements of a termination may be connected by a point-to-point communication line 26, but a ring line could be completed by adding further communication line segments.

The illustrated grouping of wavelength blockers is fault-tolerant with respect to a connection between the three terminations. Each termination may keep connection to another termination in case one wavelength blocker group fails. Other groupings are also possible, for instance a grouping used for broadcast and select architecture. In this case, one termination may lose connection to the other terminations if one wavelength blocker group fails.

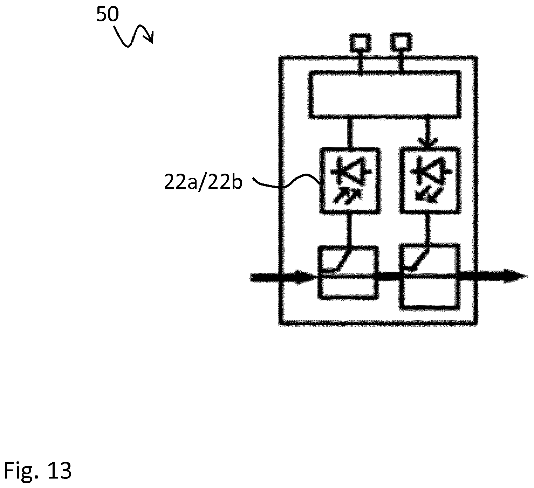

Figure 13 schematically shows a switchable optical Raman amplifier 50 as it may be used in an amplifier unit 14a - 14d according to an embodiment.

In the Raman amplifier 50, an optical supervisory channel signal may be extracted and analyzed by a detecting unit 22a/22b comprising an optical coupler and/or filter and a photodiode. Amplification may be achieved in conjunction with an upstream transmission fiber by feeding in backward direction pump laser power via an optical filter. The arrangement/the transmission fiber may be attenuating if the pump laser is turned off. The optical switching can be achieved by changing the electrical current fed to the pump laser. The optical gain on/off ratio is typically about a factor of ten. This ratio may not always be sufficient to block signal transmission. Nevertheless, a Raman amplifier is useable as an auxiliary switching unit. The control unit may have access to the monitoring photodiode and a pump laser. It also provides at least one external port for connection to the control unit in another switching unit or a common control unit 20.

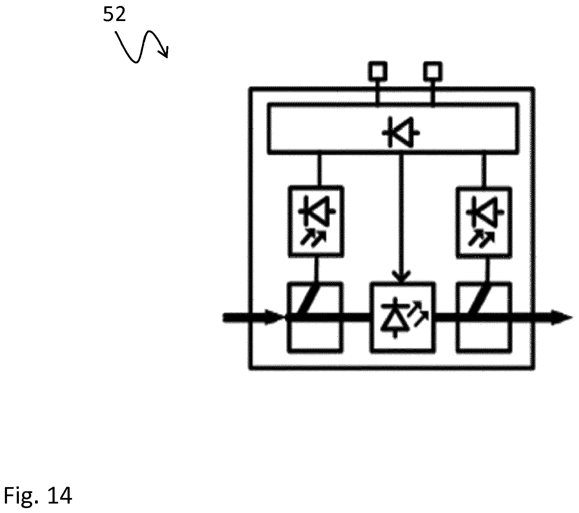

Figure 14 schematically shows a switchable semiconductor optical amplifier 52 as it may be used in an amplifier unit 14a - 14d according to an embodiment.

The switchable semiconductor optical amplifier 52 can be used as a switching unit by changing the electrical pump current fed to the semiconductor chip with an optical layer arrangement being capable for light amplification if electrical current is injected. Without injection of electrical current, the optical layer arrangement is attenuating. A photodetector may be located before the layer arrangement, to measure a power of the input light. Another photodetector may be located after the layer arrangement to measure the power of the output light. The control unit may have access to these monitoring and actuating components and provides at least one external port for connection to a control unit in another switching unit or a common control unit 20.

In case of a defective electrical power supply, the semiconductor chip with optical layer arrangement being capable for light amplification can create electron-hole pairs due to an injection of light. It is advantageous if the electrons are extracted via the electrical contacts of the appropriate electronic circuit so that the optical layer arrangement becomes more attenuating. For example, this so-called photocurrent can flow via a diode which is shown symbolically in Figure 14. The polarity of the diode should be such that the diode has low electrical resistivity for the photo current and high electrical resistivity for the current being injected for the light amplification.

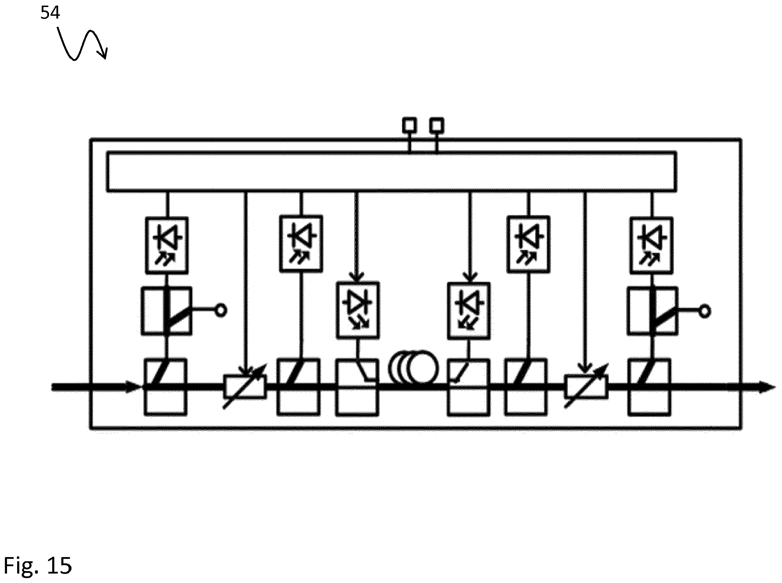

Figure 15 shows an example of an amplifier unit 54 with a single stage amplifier that may be used as an amplifier unit 14a - 14d in some embodiments. The amplifier unit 54 may use doped glass fiber (e.g. Erbium-doped). Amplification and switching may be established by connecting pump lasers via optical filters to the doped fiber. A multi-wavelength signal can be extracted by optical taps and photodiodes along the path. Variable optical attenuation including switching can be achieved by variable optical attenuators before and after the doped fiber. Ports for optical signal monitoring and OSC signal access may be available. A control unit may have access to monitoring and actuating components and may provide at least one external port for connection to a control unit in another preamplifier-switch arrangement or a separate common control unit 20.

It can be advantageous if at least one variable optical attenuator or switch exhibits high optical attenuation in case of loss of electrical bias. This is commonly denoted as normal-off behavior. For example, this blocking of light can be achieved in a MEMS mirror VOA or switch by the relaxation of the mirror tilt without an electric field being applied by a power supply.

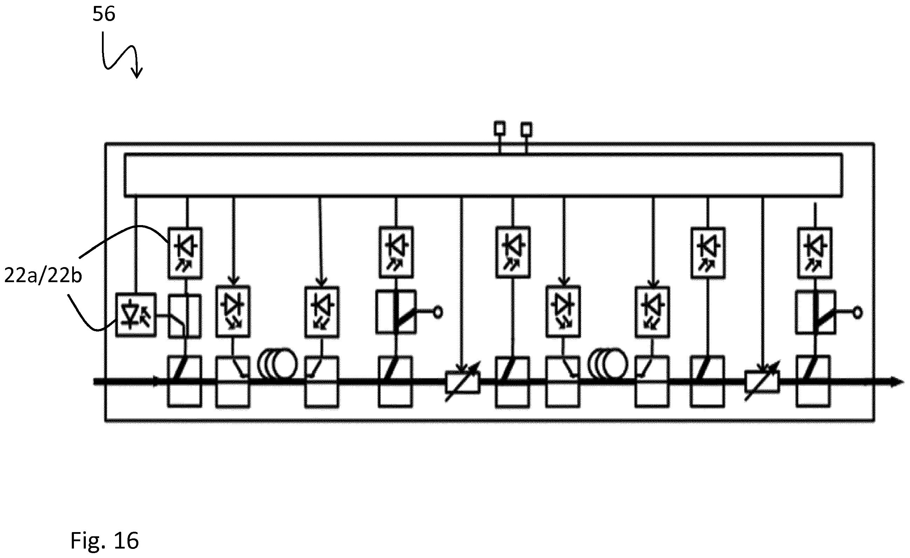

Figure 16 shows an example for a preamplifier-switch arrangement with a double stage fiber amplifier unit 56 that maybe used as an amplifier unit 14a - 14d in some embodiments. In the amplifier unit 56, an optical supervisory channel signal and a multi-wavelength signal may be extracted by detecting units 22a, 22b comprising optical taps, filters and photodiodes along the path. Amplification and switching may be established by two doped fiber sections being connected to pump lasers via optical filters. Variable optical attenuation including switching may be achieved by variable optical attenuators between and after the doped fiber. Ports for optical signal monitoring can be available. The control unit may have access to monitoring and actuating components and may provide at least one external port for connection to a control unit in another switching unit or a common control unit 20.

The above illustrations of preamplifier-switch arrangements focus on optical monitoring components and optical actuator components with access to the control unit. The Figures do not necessarily show all optical components that may be required for building optical switches and amplifiers, e.g., optical isolators, polarization beam splitter, optical cleanup filters or optical bypass filters.

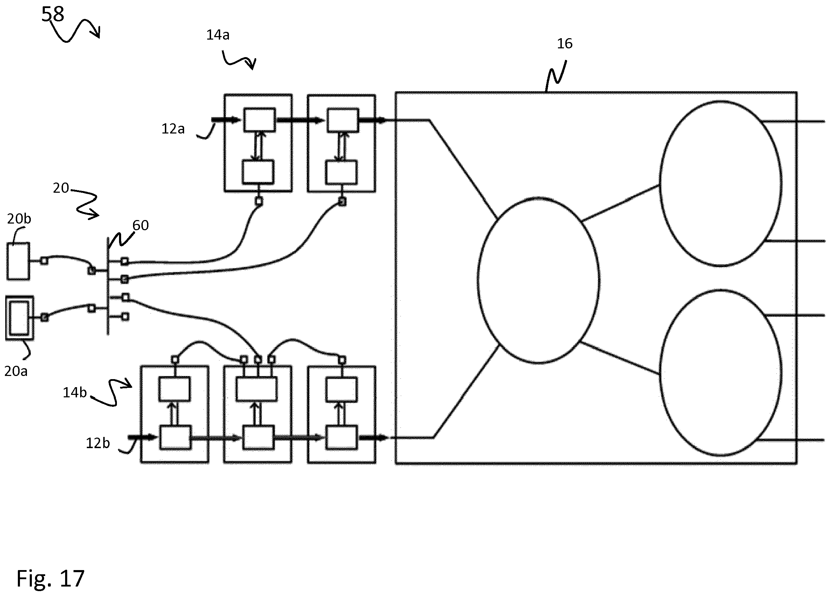

Figure 17 shows a further example for the incoming signal paths of an optical add/drop multiplexer 58 having two amplifier units 14a, 14b connected to a 2 x Ni_o input coupler unit 16. The input coupler unit 16 may be formed by a fused fiber coupler tree. Each amplifier unit 14a, 14b shown in Figure 17 consists of more than one switching device. A central control unit 20 comprising two controllers 20a, 20b outside of the amplifier units 14a, 14b are available to manage protection switching, with controller 20a being the master as illustrated by the double frame in Figure 17.

Communication between the amplifier units 14a, 14b can use dedicated controllers 20a, 20b for protection as illustrated in Figure 17, but may alternatively also reuse controllers available in the OADM for other purposes.

The controllers 20a, 20b may connect to a communication bus 60. The switch devices of the first amplifier unit 14a connect individually to the communication bus 60. The switching devices of the second amplifier unit 14b connect to the communication bus 60 via one central control element within the second amplifier unit 14b.

Even though communication paths are illustrated by single lines in Figure 17, bidirectional communication can take place. Communication may be electrical wire based, e.g., an I2C bus or Ethernet cable. But optical fibers or wireless connections are also possible. Communication lines can be arranged in various architectures according to bus chain or ring as illustrated in Figure 17, or according to e.g. a star, tree or mesh topology.

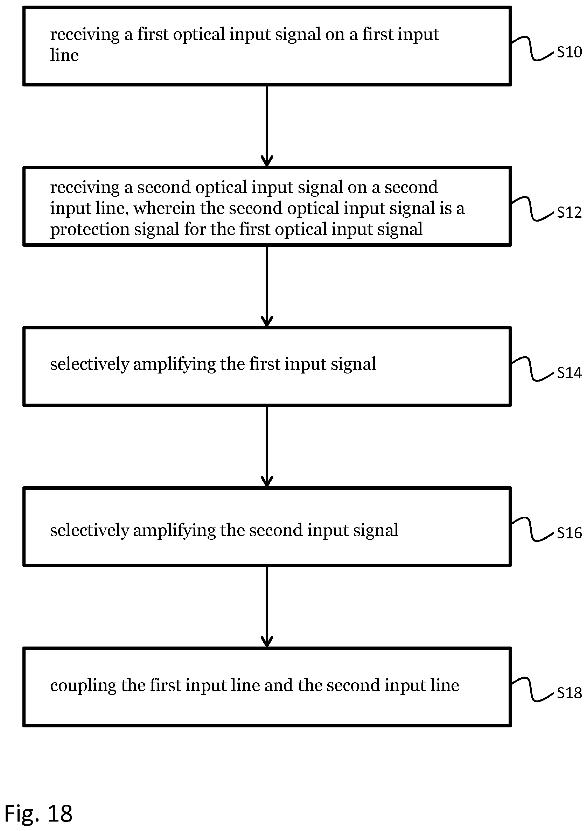

Figure 18 is a flow diagram that illustrates a method for operating an optical network device according to an embodiment.

In a first step S10, the method comprises receiving a first optical input signal on a first input line.

The method may optionally further comprise receiving a third optical input signal on the first input line.

In a second step S12, the method comprises receiving a second optical input signal on a second input line, wherein the second optical input signal is a protection signal for the first optical input signal.

The second optical input signal may provide redundancy for the first optical input signal, in case the first optical input signal experiences a deterioration or failure or is switched off due to maintenance. In particular, the second optical input signal may duplicate first optical input signal, and hence no signal is lost in case the first optical input signal fails.

The method may optionally further comprise receiving a third optical input signal on the second input line.

In a third step S14, the first input signal is selectively amplified.

In a fourth step S16, the second input signal is selectively amplified.

In the context of the present disclosure, amplifying the first input signal and/or the second input signal may comprise a signal amplification or a signal de-amplification/attenuation.

In a fifth step S18, the first input line and the second input line are coupled, such as to provide an output signal on the combined output line.

Figure 18 shows the steps S10 to S18 in a certain order. However, this order is for means of illustration only, and in other embodiments the steps may be implemented in a different order.

The method may be implemented on a computing device as a computer program or a computer program product comprising computer-readable instructions such that the instructions, when read on a computer, implement a method with the steps S10 to S18. The computer-readable instructions may be stored on a tangible storage medium, such as on the memory of the computing device.

The embodiments described above and the Figures merely serve to illustrate the techniques of the present disclosure, but should not be understood to imply any limitation. The scope of the disclosure is determined by the appended claims.

### Reference Signs

- 10, 10', 10": optical network device
- 12a: first input line of optical network device 10, 10', 10"
- 12b: first input line of optical network device 10, 10', 10"
- 12c: third input line of optical network device 10, 10', 10"
- 12d: fourth input line of optical network device 10, 10', 10"
- 14a, 14a': first amplifier unit of optical network device 10, 10', 10"
- 14b, 14b': second amplifier unit of optical network device 10, 10', 10"
- 14c: third amplifier unit of optical network device 10, 10', 10"
- 14d: fourth amplifier unit of optical network device 10, 10', 10"
- 16: input coupler unit of optical network device 10, 10', 10"
- 18: output signal line of input coupler unit 16
- 20: control unit of optical network device 10, 10', 10"
- 20a, 20b: control units of optical network device
- 22a, 22a': first detecting unit of optical network device 10, 10', 10"
- 22b, 22b': second detecting unit of optical network device 10, 10', 10"
- 24: output coupler unit
- 26: bidirectional communication line
- 28: reconfigurable optical add/drop multiplexer
- 30, 30': optical add/drop multiplexer
- 32: wavelength blocker unit
- 34, 34': wavelength blockers
- 36a, 36b: amplifiers
- 38a, 38b: variable optical attenuators
- 40a, 40b: amplifiers
- 42, 42': interconnected ROADM structures
- 44: upgrade port
- 46: switch of upgrade port 44
- 48: ROADM with nodal degree 3
- 50: switchable Raman optical amplifier
- 52: switchable semiconductor optical amplifier
- 54: amplifier unit with a single-stage optical amplifier
- 56: double stage fiber amplifier unit
- 58: optical add/drop multiplexer
- 60: communication bus
- 62, 62': transponders for optical transport network signal overhead information
- 64, 64': communication lines

## Claims

1. An optical network device (10, 10', 10"), comprising:
a first input line (12a, 12b, 12c, 12d) adapted to receive a first optical input signal;
a second input line (12a, 12b, 12c, 12d) adapted to receive a second optical input signal, wherein the second input line (12a, 12b, 12c, 12d) is a protection line for the first input line (12a, 12b, 12c, 12d);
a first amplifier unit (14a, 14b, 14c, 14d) in the first input line (12a, 12b, 12c, 12d) and adapted to selectively amplify the first optical input signal;
a second amplifier unit (14a, 14b, 14c, 14d) in the second input line (12a, 12b, 12c, 12d) and adapted to selectively amplify the second optical input signal;
an input coupler unit (16) adapted to couple the first input line (12a, 12b, 12c, 12d) and the second input line (12a, 12b, 12c, 12d) downstream of the first optical amplifier unit (14a, 14b, 14c, 14d) and the second optical amplifier unit (14a, 14b, 14c, 14d) into an output line (18); and
a control unit (20; 20a, 20b) adapted to selectively control an operation of the first amplifier unit (14a, 14b, 14c, 14d) and an operation of the second amplifier unit (14a, 14b, 14c, 14d).

2. The device (10, 10', 10") according to claim 1, further comprising:
a first detecting unit (22a, 22b; 22a', 22b') adapted to detect a presence or an absence of the first optical input signal in the first input line (12a, 12b, 12c, 12d), and/or
adapted to detect a presence or an absence of a third optical input signal in the first input line (12a, 12b, 12c, 12d), wherein the third optical input signal is different from the first optical input signal and/or the second optical input signal.

3. The device (10, 10', 10") according to claim 2, wherein the control unit (20; 20a, 20b) is adapted to activate an operation of the second optical amplifier unit (14a, 14b, 14c, 14d) and/or to deactivate an operation of the first optical amplifier unit (14a, 14b, 14c, 14d) in response to the first detecting unit (22a, 22b; 22a', 22b') detecting the absence of the first optical input signal in the first input line (12a, 12b, 12c, 12d), and/or in response to the first detecting unit (22a, 22b; 22a', 22b') detecting the presence or the absence of the third optical input signal in the first input line (12a, 12b, 12c, 12d).

4. The device (10, 10', 10") according to any of the preceding claims, wherein the first amplifier unit (14a, 14b, 14c, 14d) and/or the second amplifier unit (14a, 14b, 14c, 14d) comprise a switchable optical amplifier (50), in particular a switchable Raman optical amplifier (50) and/or a switchable semiconductor optical amplifier (52) and/or a switchable fiber optical amplifier.

5. The device (10, 10', 10") according to any of the preceding claims, wherein the first amplifier unit (14a, 14b, 14c, 14d) and/or the second amplifier unit (14a, 14b, 14c, 14d) comprise a variable optical attenuator (38a, 38b).

6. The device (10, 10', 10") according to claim 5, wherein the first amplifier unit (14a, 14b, 14c, 14d) and/or the second amplifier unit (14a, 14b, 14c, 14d) comprise an amplifier (36a, 36b, 40a, 40b) and a variable optical attenuator (38a, 38b) connected in series.

7. The device (10, 10', 10") according to any of the preceding claims, wherein the input coupler unit (16) comprises a wavelength-selective switch and/or a star coupler.

8. The device (10, 10', 10") according to any of the preceding claims, wherein the device (10, 10', 10") does not comprise an optical switch to selectively switch between the first input line (12a, 12b, 12c, 12d) and the second input line (12a, 12b, 12c, 12d).

9. The device (10, 10', 10") according to any of the preceding claims, further comprising a wavelength blocker unit (32; 34, 34') downstream of the input coupler unit (16).

10. An optical add drop multiplexer (28; 30, 30'; 42, 42'; 48; 58), comprising at least one device (10, 10', 10") according to any of the preceding claims.

11. A method for operating an optical network device (10, 10', 10"), comprising:
receiving a first optical input signal on a first input line (12a, 12b, 12c, 12d);
receiving a second optical input signal on a second input line (12a, 12b, 12c, 12d), wherein the second optical input signal is a protection signal for the first optical input signal;
selectively amplifying the first input signal;
selectively amplifying the second input signal; and
coupling the first input line and the second input line.

12. The method according to claim 11, wherein selectively amplifying the first input signal and/or the second input signal comprises selectively amplifying and/or selectively attenuating or blocking the first input signal and the second input signal, respectively.

13. The method according to claim 11 or 12, further comprising:
detecting a presence or an absence of the first optical input signal in the first input line (12a, 12b, 12c, 12d), and/or
detecting a presence or an absence of a third optical input signal in the first input line (12a, 12b, 12c, 12d), wherein the third optical input signal is different from the first optical input signal and/or the second optical input signal.

14. The method according to claim 13, further comprising:
selectively amplifying the second optical input signal and/or selectively attenuating or blocking the first optical input signal in response to detecting the absence of the first optical input signal in the first input line (12a, 12b, 12c, 12d), and/or in response to detecting the presence or the absence of the third optical input signal in the first input line (12a, 12b, 12c, 12d).

15. A computer program comprising computer-readable instructions such that the instructions, when read on a computer, implement a method according to any of the claims 11 to 14.
